# EUROPEAN PATENT SPECIFICATION

(11) **EP 3 814 029 B1**
(45) Date of publication and mention of the grant of the patent: **18.11.2026**
(21) Application number: 19798977.5
(22) Date of filing: 07.05.2019
(51) Int. Cl.: B08B 7/04, B29C 33/72, B25J 11/00, B08B 7/00, B23K 26/03, B23K 26/08, B23K 26/36, B25J 9/00, B25J 21/00

(54) **LASER CLEANING SYSTEM**
LASERREINIGUNGSSYSTEM
SYSTÈME DE NETTOYAGE LASER

(30) Priority: 08.05.2018 AU 2018203176
(43) Date of publication of application: 05.05.2021
(73) Proprietor: Automation Innovation Pty Ltd, Keysborough, Victoria 3173 (AU)
(72) Inventor: MEYLER, Walter, Lysterfield, Victoria 3173 (AU); CLARKE, Marcus, Mt Martha, Victoria 3934 (AU)
(74) Representative: Grund, Martin
(86) International application number: PCT/AU2019/050416
(87) International publication number: WO 2019/213698

(56) References cited:
- EP-A1- 3 141 367
- EP-A1- 3 162 524
- WO-A1-2017/078131
- WO-A1-2017/082162
- CN-A- 107 138 858
- KR-B1- 100 466 138
- US-A- 5 643 367
- US-A- 5 643 367
- US-A1- 2008 031 298
- US-A1- 2017 182 722

## Description

### Field

The invention relates to an automated cleaning system for cleaning a mould for use in manufacturing glass containers, and to a method for automated cleaning of a mould for use in manufacturing glass containers.

### Background

One common process to manufacture of glass containers or bottles is a two-stage moulding process. In the first stage, molten glass is poured into a first mould to form a parison of a certain shape and dimensions. In the second stage, the parison is moved to a second mould, where it is blown into the mould to take the final shape of the glass bottle or container.

Typically, a graphite based lubricant solution is applied to the moulds between each manufacturing cycle, to facilitate removal of the glass item from the mould. Over time, residual lubricant (and/or other contaminants) builds up as a scale on the moulds. Therefore, the moulds need to be periodically removed for cleaning.

Cleaning usually takes place at a cleaning site that is remote from the manufacturing facility. The prevailing cleaning system takes about 4 hours for a set of moulds, and involves shot blasting the moulds with ceramic, metal or sand beads.

Under this system, the blasting erodes the parent material of the mould. The means that, over time, the mould tolerance deteriorates, and this deterioration must be compensated for during the manufacturing process (for example by adding extra glass to the shot to maintain the volume of the container - which can be very expensive), or alternatively the mould must be replaced (i.e. the cleaning process can decrease the lifespan of the mould).

The gradual erosion of the mould material also means that its square edges become dulled, and the dulled edges need to be dressed by a qualified tradesperson. This is labour- and time-intensive, and also expensive.

Furthermore, the erosion of the mould can cause fine glass features (such as a logo, branding or other indicia) to become dulled and unclear.

Another problem with the current system is that ceramic can beads get stuck in the air ports of a mould. This causes issues in the main manufacturing line - in particular, it can cause contamination and defects in containers.

Finally, the blasting process is a completely manual process, and inconsistencies can arise between different operators.

Document EP 3 141 367 A1 discloses an automated cleaning system suitable for cleaning a mould for manufacturing glass containers according to the preamble of claim 1.

It is an object of the invention to substantially overcome or at least ameliorate one or more of the disadvantages of the prior art, or at least provide a useful alternative to conventional cleaning apparatus.

### Summary

In an aspect of the present invention, there is provided an automated cleaning system for cleaning a mould for use in manufacturing glass containers, comprising:
a housingto provide an isolated space for cleaning of the mould;
   - a carriage apparatus to carry the mould into and out of the isolated space;
   - a laser configured to be directed at the mould, to remove contaminants from the mould;
   - a detection apparatus to identify a position of the mould, to identify mould features and areas of contamination of the mould;
wherein the detection apparatus comprises one or more cameras to precisely identify the mould features and areas of contamination;
   - a movement apparatus to move the mould into and/or out of a cleaning position;
   - and a control apparatus to direct the laser at the mould in the cleaning position, and
operate the laser to clean the mould, wherein the control apparatus comprises a cleaning robot configured to move the laser and selectively turn the laser on and off, and wherein the cleaning robot comprises a processor in communication with the detection apparatus, the processor being configured to move the laser in a cleaning pattern over the mould in response to observations made by the detection apparatus;
wherein the carriage apparatus comprises an automated trolley for carrying a set of moulds, and wherein the movement apparatus sequentially moves each mould into the cleaning position for cleaning, and returns the mould to the trolley after cleaning;
wherein the movement apparatus comprises a handling robot having a holding arm with a claw at its end which is sized appropriately to grasp the moulds, such that the mould can then be picked up, moved to the cleaning position, cleaned and returned to the trolley.

The housing may include labyrinth gates into and out of the isolated space.

In examples not part of the present invention, the carriage apparatus may include conveyor belt(s) or other mechanisms for carrying object(s) into and/or out of the isolated space.

In another aspect of the invention, there is provided a method for automated cleaning of of a mould for use in manufacturing glass containers, the method comprising:
carrying the object into an isolated space;
moving the object to a cleaning position, using a handling robot;

identifying mould features and areas of contamination of the object using a detection apparatus comprising one or more cameras;
   cleaning the object using a laser mounted on a cleaning robot; and
   carrying the object out of the isolated space,
wherein the cleaning robot is configured to move the laser and selectively turn the laser on and off;
   - and wherein the cleaning robot comprises a processor in communication with the detection apparatus, the processor being configured to move the laser in a cleaning pattern over the mould, in response to observations made by the detection apparatus;
wherein the mould is carried into and out of the isolated space using a trolley;
wherein the trolley carries a set of moulds into and out of the isolated space, and the method comprises sequentially moving each mould from the trolley to the cleaning position, cleaning each mould, and returning each mould to the trolley;
wherein the movement apparatus comprises a handling robot having a holding arm with a claw at its end which is sized appropriately to grasp the moulds, such that the mould can then be picked up, moved to the cleaning position, cleaned and returned to the trolley.

Through the use of the invention, objects can be cleaned in a precise and repeatable fashion. The use of a laser has advantages over conventional shot blasting methods used for cleaning glass manufacturing moulds, in that there is little if any erosion of the moulds.

In addition, the use of robots within an isolated space means that operators and other workers at the cleaning facility are not exposed to noxious fumes generated during the laser cleaning process.

A detailed description of one or more embodiments of the invention is provided below, along with accompanying figures that illustrate by way of example the principles of the invention. While the invention is described in connection with such embodiments, it should be understood that the invention is not limited to any embodiment. On the contrary, the scope of the invention is limited only by the appended claims and the invention encompasses numerous alternatives, modifications and equivalents.

For the purpose of example, numerous specific details are set forth in the following description in order to provide a thorough understanding of the present invention. The present invention may be practiced according to the claims without some or all of these specific details. For the purposes of clarity, technical material that is known in the technical fields related to the invention has not been described in detail so that the present invention is not unnecessarily obscured.

### Brief Description of the Drawings

Preferred embodiments of the invention will now be described with reference to the accompanying drawings wherein:
**Figures 1 to 7** sequentially depict the operation of a cleaning system according to an embodiment of the present invention, to clean a glass mould. Note that various components have been removed or cut away in different figures, to best show the relevant features.
**Figure 8** is a top view of a laser cleaning system according to an embodiment of the invention, with the housing partially cut away.
**Figure 9** is a perspective view of a mould cleaning table for use in accordance with an embodiment of the invention.
**Figure 10** depicts in greater detail the laser cleaning operation of the system of Figure 1.

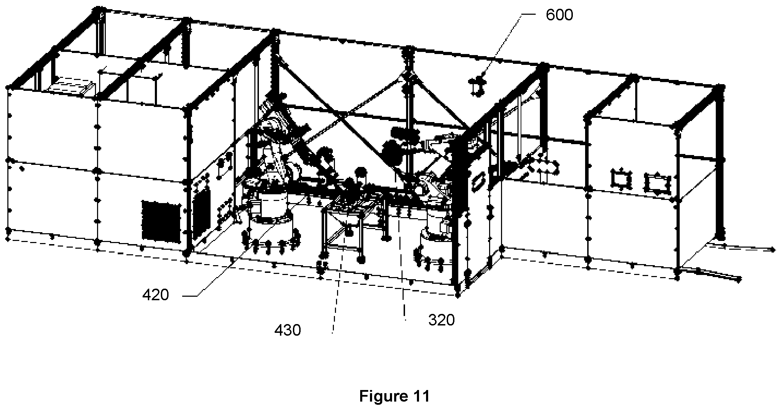

**Figure 11** is a perspective view of the laser cleaning system of Figure 1, with parts of the housing cut away.
**Figure 12** depicts a shape for a bottle formed by a mould to be cleaned in accordance with embodiments of the invention.
**Figure 13** depicts cross-section A-A from Figure 12.

### Detailed Description

In accordance with an embodiment of the invention, there is provided a laser cleaning system 100 including a housing 200 which provides an isolated space for cleaning of glass manufacturing moulds 700. Entry into and out of the isolated space is provided through a pair of labyrinth gates 210.

Within the isolated space, there are a provided a pair of robots - a handling robot 300, and a cleaning robot 400. A trolley 500 is provided to carry moulds 700 into and out of the housing 200. In addition, cameras 600 are also provided to observe the position of items within the isolated space.

The handling robot 300 includes a handling arm 310 with a claw 320 at its end, which is sized appropriately to grasp the moulds 700. The handling robot 300 includes a processor, which receives image data from the cameras 600, showing the position of mould(s) 700 within the isolated space. The image data from the cameras 600 may be received in raw form by the handling robot 300, and analysed to determine the position of the moulds 700. Alternatively, the image data may be externally processed (e.g. by a separate processor associated with the cameras 600) to identify the position of relevant features within the housing 200, and this position data can then be transmitted to the robots 300, 400. Once the position of the moulds 700 is determined, the processor of the handling robot 300 can then control the operation of the handling harm 310 and claw 320, to move the moulds 700 for cleaning, as explained below.

The cleaning robot 400 includes a control arm 410, which has a laser 420 mounted on it. Different types of laser may be used depending on the particular application, but in this embodiment, the laser is preferably a relatively high powered industrial laser in the range of 200W to 1000W. In one (non-limiting) embodiment, the laser may be a 1000W laser operating at approximately 1064nm wavelength. The cleaning robot 400 also includes a processor in communication with the cameras 600. Image data from the cameras 600 can be used to precisely operate the laser 420 to clean the moulds 700, as explained in more detail below.

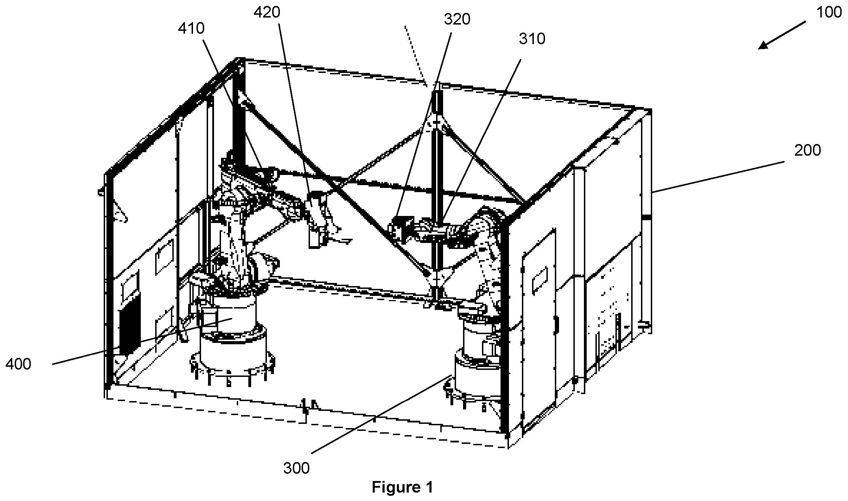

Figures 1 to 7 show the operation of the cleaning system of this embodiment of the invention. For convenience, to show the system components in operation, various features have been removed or cut away from these Figures. However,

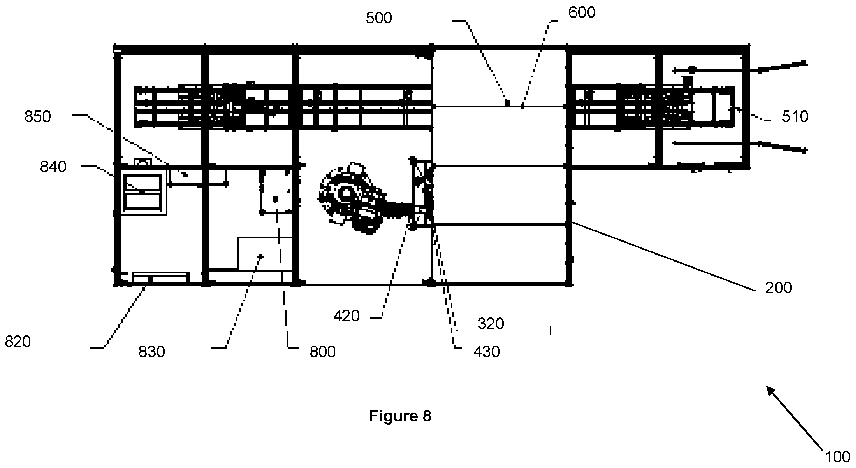

Figures 8 (top view) and 11 (cut-away perspective view) provide a more complete overview of the entire system 100.

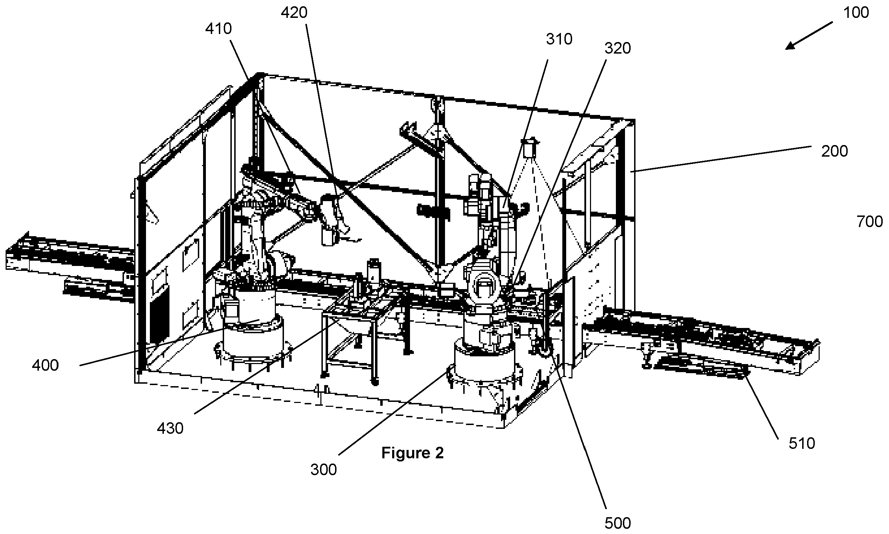

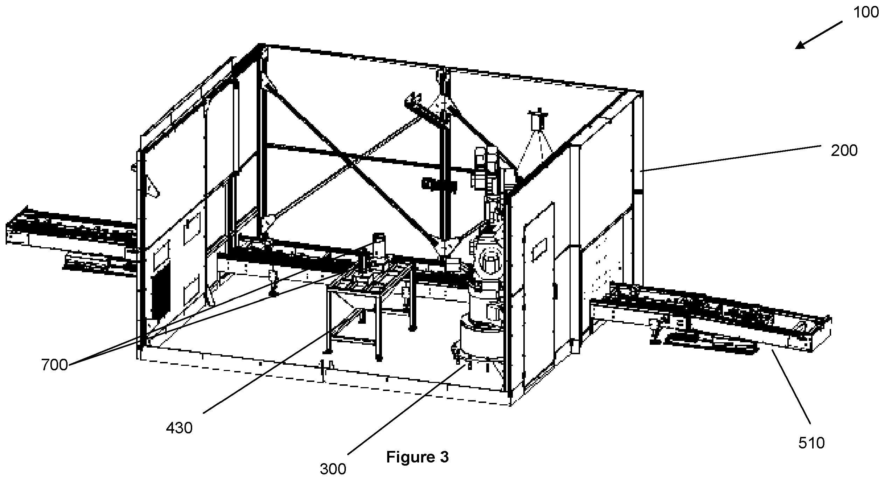

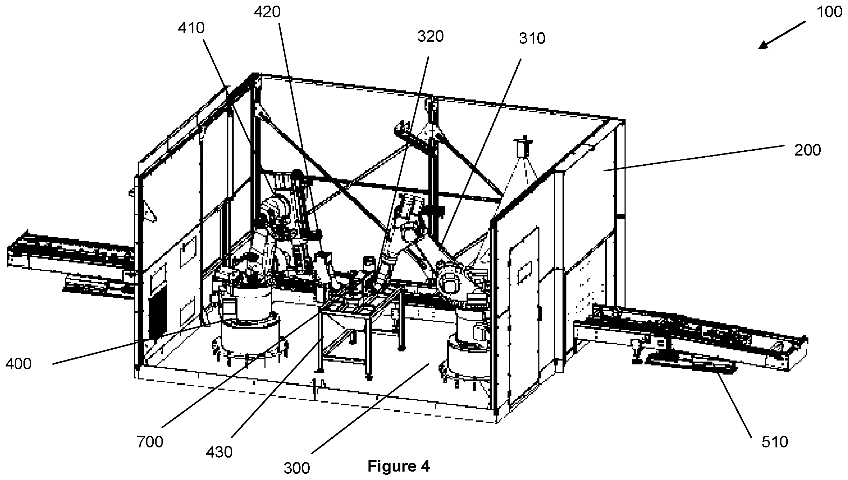

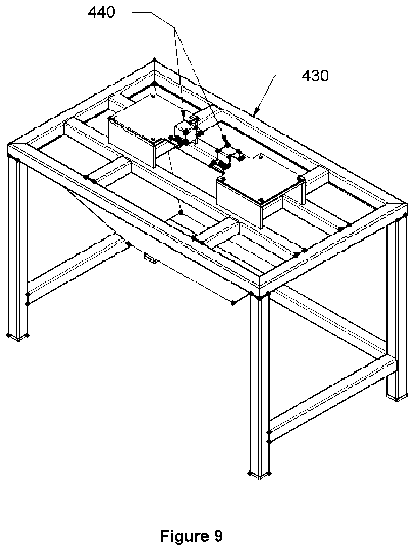

In Figure 1, the housing 200 is empty apart from the robots 300, 400. Figure 2 shows the entry of trolley 500, past labyrinth gates 210. Within the trolley 500 are a set of moulds 700 for cleaning. In this embodiment, a single mould 700 is picked up by the claw 320 of the handling robot 300, and transferred into a cleaning position within a cleaning station 430 of the cleaning robot 400, as shown in Figures 3 and 4. The use of a specific cleaning station 430 ensures that the mould 700 is precisely positioned for cleaning, and ensures that the cleaning robot 400 can clearly identify features of the mould 700 that require cleaning. As shown in Figure 9, the cleaning station includes mould detection sensors 440, which detect when a mould is in place and ready for cleaning.

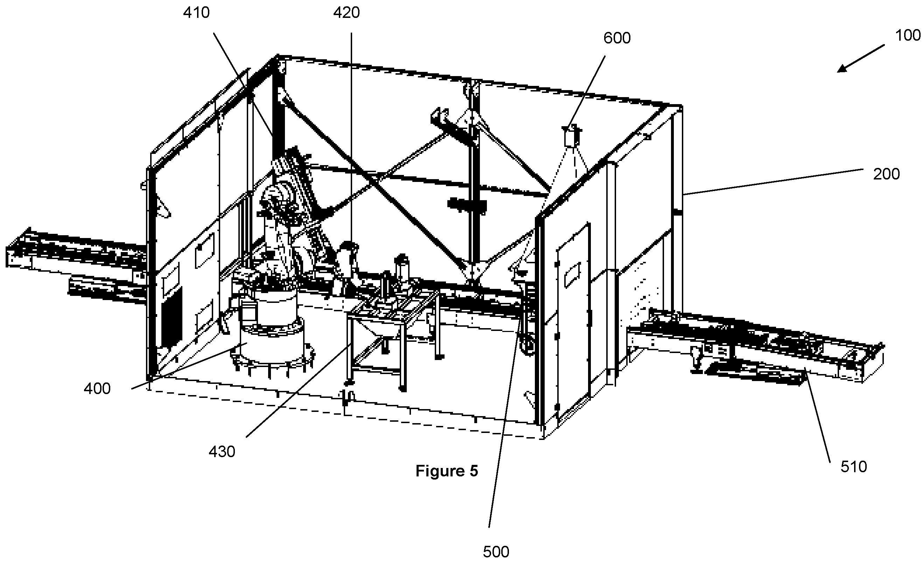

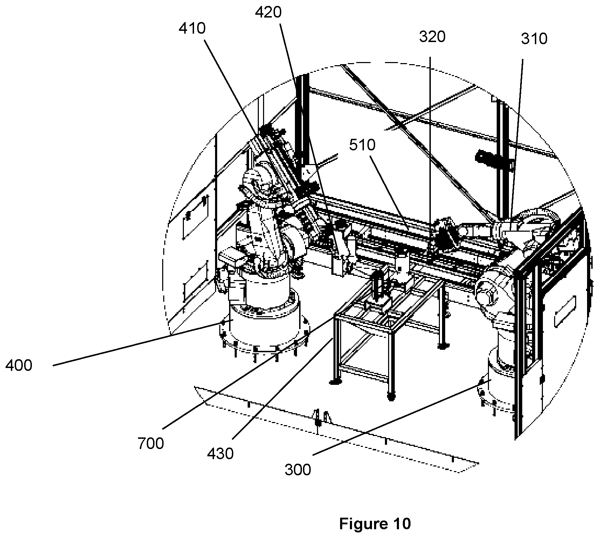

Figure 5 depicts the cleaning robot 400 in operation, cleaning a mould 700 using the laser. The cleaning operation, at this stage, may follow a variety of cleaning algorithms depending on the particular object to be cleaned, and the nature of any scale or other contaminants. Figure 10 depicts this cleaning operation in more detail.

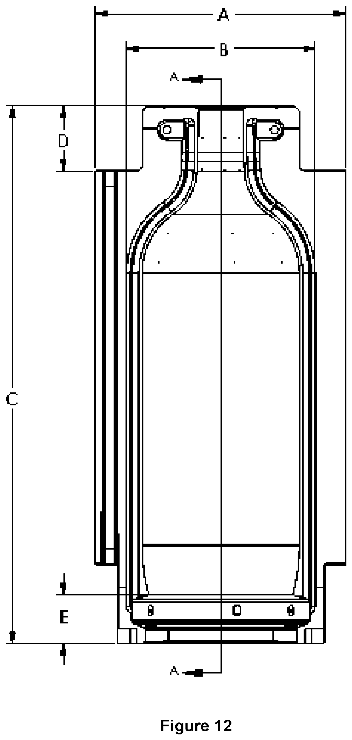

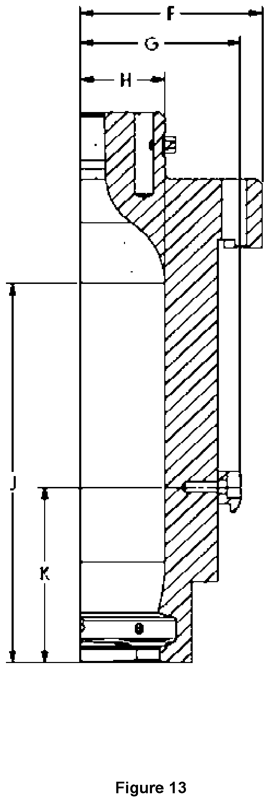

One option is be for the cleaning robot to simply follow a predetermined pattern to ensure the laser is applied to all areas of the mould 700. However, this will usually be inefficient. Accordingly, data from the cameras 600 is used to precisely identify the mould features and the areas of contamination. For example, contaminated areas are frequently of a different colour to the rest of the mould 700. Contamination of moulds 700 also typically occurs more frequently in some areas than in others - for example, around the edges of the mould. The image data from cameras 600 may be analysed to look for colours associated with contamination, and or shapes within the mould 700 (based on the mould design) that are susceptible to scale build up. This allows contaminated areas to be identified more precisely, for cleaning by the cleaning robot 400. The identification of contaminated areas may be assisted if mould profile data (for the mould 700 to be cleaned) is loaded into the control software for the cleaning robot 400 (and/or handling robot 300), via a user interface. This provides a simpler way to program mould profile data into the control system. More detail of this step is described below with reference to Figures 12 and 13.

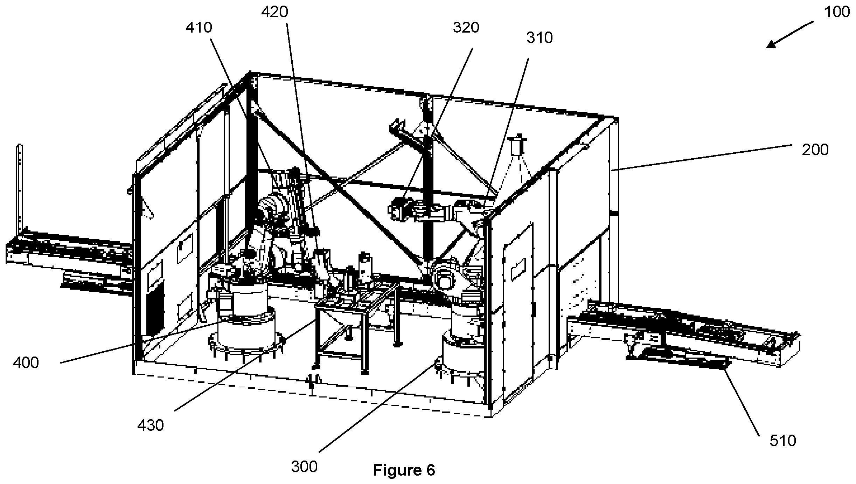

Once the mould 700 has been cleaned, it is returned to the trolley 500 by the handling robot 300, as shown in Figure 6. The next mould 700 can then be picked up, moved to the cleaning position, cleaned and returned to the trolley 500 as described above.

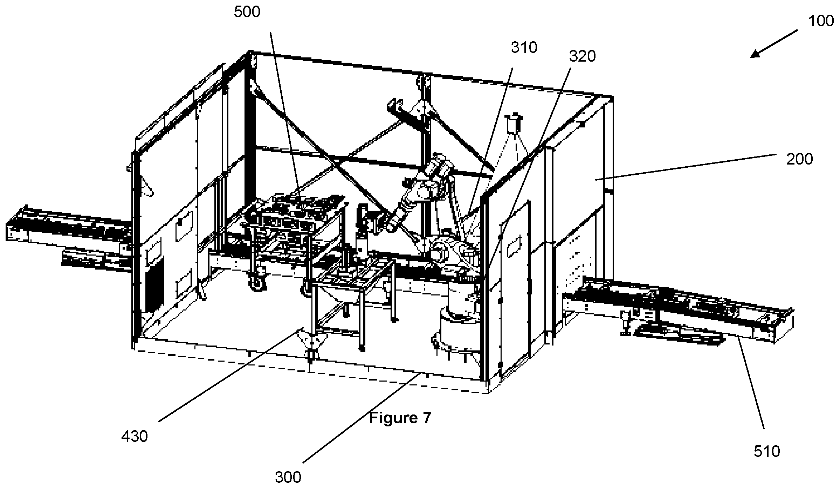

Once an entire set of moulds 700 have been cleaned, the trolley can exit the housing 200 through labyrinth gate 210, as shown in Figure 7.

Initial trials indicate that the cleaning system 100 according to this embodiment of the present invention can clean a set of moulds in far less time than conventional manual cleaning methods. In addition, cleaning using the present invention appears to result in significantly less erosion of the parent mould material.

One risk to the smooth operation of the cleaning system 100 is the state of the lens on the laser. In particular, the lens should be maintained as clean as possible, because contamination can cause cracking of the lens. To help avoid this, an exhaust system may be used to pull contamination and fumes out of the isolated space. However, preferably, a lens monitor is also included in the system 100. In particular, an infrared sensor may be used to monitor the temperature of the lens, because the temperature of the lens has a direct relationship to the level of contamination on the lens. In this embodiment, the temperature of the lens is checked at substantially regular intervals, and if the temperature rises above a certain threshold, this mean the lens may heading for failure. The cleaning process should therefore be temporarily stopped to allow the lens to be cleaned. The particular temperature will depend on the type and quality of the lens itself.

In relation to programming the mould profile, the system preferably provides an intuitive way for an operator to specify the object profile. Because information is known about the object in advance (for example, that it is a glass mould for a glass bottle), a generalised object profile may be used, with parameters allowing an operator to specify the shape of this particular object type. In this case, glass bottles have a known generalised shape, but a particular bottle may be taller, shorter, or have different contours to other glass bottles. Accordingly, a mould shape may be specified using the parameters of the glass bottle it is used to form. Figure 12 depicts, for example, a generalised bottle shape, with parameters A, B, C, D, E, F, G, H, I, J and K defining the dimensions of the bottle.

To specify a mould shape, an operator may first select a 'new product' option, and elect to teach the system a new mould shape. The operator is then prompted, by the system, to specify the parameters of the predetermined profile shape type (e.g. options A to K shown in Figures 12 and 13, although different numbers of parameters may be specified for different object types). These dimensional parameters may be entered in mm or any other desired measure of distance.

Once all the data values have been entered, the operator can save the product as a new or existing product. These steps are preferably performed on a separate user interface machine. When this product is selected to run, to be cleaned by the present invention, the cleaning robot will be passed this data and will change the program automatically according to the object profile created - i.e. it will be informed how and where the object will most need to be cleaned.

Throughout this specification and the claims which follow, unless the context requires otherwise, the word "comprise", and variations such as "comprises" and "comprising", will be understood to imply the inclusion of a stated integer or step or group of integers or steps, but not the exclusion of any other integer or step or group of integers or steps.

The reference in this specification to any prior publication (or information derived from it), or to any matter which is known is not, and should not be taken as an acknowledgment or admission or any form of suggestion that that prior publication (or information derived from it) or known matter forms part of the common general knowledge in the field of endeavour to which this specification relates.

## Claims

1. An automated cleaning system (100) for cleaning a mould (700) for use in manufacturing glass containers, comprising:
a housing (200) to provide an isolated space for cleaning of the mould (700);
a carriage apparatus to carry the mould (700) into and out of the isolated space;
a laser (420) configured to be directed at the mould (700), to remove contaminants from the mould (700);
a detection apparatus to identify a position of the mould (700), to identify mould features and areas of contamination of the mould (700);
wherein the detection apparatus comprises one or more cameras (600) to precisely identify the mould features and areas of contamination;
a movement apparatus to move the mould (700) into and/or out of a cleaning position; and
a control apparatus to direct the laser (420) at the mould (700) in the cleaning position, and operate the laser (420) to clean the mould (700),
wherein the control apparatus comprises a cleaning robot (400) configured to move the laser (420) and selectively turn the laser (420) on and off, and
wherein the cleaning robot (400) comprises a processor in communication with the detection apparatus, the processor being configured to move the laser (420) in a cleaning pattern over the mould (700) in response to observations made by the detection apparatus;
wherein the carriage apparatus comprises an automated trolley (500) for carrying a set of moulds (700), and wherein the movement apparatus sequentially moves each mould (700) into the cleaning position for cleaning, and returns the mould (700) to the trolley (500) after cleaning;
wherein the movement apparatus comprises a handling robot (300) having a holding arm with a claw (320) at its end which is sized appropriately to grasp the moulds (700), such that each mould (700) can then be picked up, moved to the cleaning position, cleaned and returned to the trolley (500).

2. The automated cleaning system of any preceding claim, wherein the housing (200) comprises labyrinth gates (210) into and out of the isolated space.

3. The automated cleaning system of any preceding claim, wherein the laser (420) comprises a lens, and further comprising a lens monitor to detect potential failure of the lens.

4. The automated cleaning system of claim 3, wherein the lens monitor comprises an infrared sensor, to monitor the temperature of the lens.

5. A method for automated cleaning of a mould (700) for use in manufacturing glass containers with a system according to any of the preceding claims, the method comprising:
carrying the mould (700) into an isolated space;
moving the mould (700) to a cleaning position, using a handling robot (300);
identifying mould features and areas of contamination of the object using a detection apparatus comprising one or more cameras (600);
then cleaning the mould (700) using a laser (420) mounted on a cleaning robot (400); and
carrying the mould (700) out of the isolated space;
wherein the cleaning robot (400) is configured to move the laser (420) and selectively turn the laser (420) on and off and wherein the cleaning robot (400) comprises a processor in communication with the detection apparatus, the processor being configured to move the laser (420) in a cleaning pattern over the mould (700), in response to observations made by the detection apparatus;
wherein the mould (700) is carried into and out of the isolated space using a trolley (500);
wherein the trolley (500) carries a set of moulds (700) into and out of the isolated space, and the method comprises sequentially moving each mould (700) from the trolley (500) to the cleaning position, cleaning each mould (700), and returning each mould (700) to the trolley (500); and
wherein the movement apparatus comprises a handling robot (300) having a holding arm with a claw at its end which is sized appropriately to grasp the moulds (700), such that the mould can then be picked up, moved to the cleaning position, cleaned and returned to the trolley (500).

6. The method of any preceding claim, wherein the laser (420) comprises a lens, and further comprising a lens monitor to detect potential failure of the lens.

7. The method of claim 6, wherein the lens monitor comprises an infrared sensor, to monitor the temperature of the lens.

## Patentansprüche

1. Automatisiertes Reinigungssystem (100) zum Reinigen einer Form (700) zur Verwendung bei der Herstellung von Glasbehältern, umfassend:
ein Gehäuse (200) zur Bereitstellung eines isolierten Raums für die Reinigung der Form (700);
eine Transportvorrichtung zum Transportieren der Form (700) in den und aus dem isolierten Raum;
einen Laser (420), der so konfiguriert ist, dass er auf die Form (700) gerichtet wird, um Verunreinigungen von der Form (700) zu entfernen;
eine Erfassungsvorrichtung zum Erkennen einer Position der Form (700), zum Erkennen von Formmerkmalen und von verunreinigten Bereichen der Form (700), wobei die Erfassungsvorrichtung eine oder mehrere Kameras (600) umfasst, um die Formmerkmale und verunreinigten Bereiche präzise zu erkennen;
eine Bewegungsvorrichtung zum Bewegen der Form (700) in eine Reinigungsposition und/oder aus dieser heraus; und
eine Steuervorrichtung, um den Laser (420) in der Reinigungsposition auf die Form (700) zu richten und den Laser (420) zu betreiben, um die Form (700) zu reinigen,
wobei die Steuervorrichtung einen Reinigungsroboter (400) umfasst, der so konfiguriert ist, dass er den Laser (420) bewegt und den Laser (420) selektiv ein- und ausschaltet, und
wobei der Reinigungsroboter (400) einen Prozessor umfasst, der mit der Erfassungsvorrichtung in Verbindung steht, wobei der Prozessor so konfiguriert ist, dass er den Laser (420) als Reaktion auf von der Erfassungsvorrichtung gemachte Beobachtungen in einem Reinigungsmuster über die Form (700) bewegt;
wobei die Transportvorrichtung einen automatisierten Transportwagen (500) zum Transportieren eines Satzes von Formen (700) umfasst, und wobei die Bewegungsvorrichtung jede Form (700) nacheinander in die Reinigungsposition zur Reinigung bewegt und die Form (700) nach der Reinigung zum Transportwagen (500) zurückbringt;
wobei die Bewegungsvorrichtung einen Handhabungsroboter (300) umfasst, der einen Greifarm mit einer Greifzange (320) an seinem Ende aufweist, deren Größe angepasst ist, um die Formen (700) zu halten, sodass jede Form (700) hochgehoben, in die Reinigungsposition gebracht, gereinigt und wieder zum Transportwagen (500) zurückgebracht werden kann.

2. Automatisiertes Reinigungssystem nach einem der vorstehenden Ansprüche, wobei das Gehäuse (200) Labyrinth-Zugänge (210) in den und aus dem isolierten Raum umfasst.

3. Automatisiertes Reinigungssystem nach einem der vorstehenden Ansprüche, wobei der Laser (420) eine Linse umfasst sowie ferner einen Linsenmonitor, um einen möglichen Ausfall der Linse zu erkennen.

4. Automatisiertes Reinigungssystem nach Anspruch 3, wobei der Linsenmonitor einen Infrarotsensor umfasst, um die Temperatur der Linse zu überwachen.

5. Verfahren zur automatisierten Reinigung einer Form (700) zur Verwendung bei der Herstellung von Glasbehältern mit einem System nach einem der vorstehenden Ansprüche, das Verfahren umfassend:
Transportieren der Form (700) in einen isolierten Raum;
Bewegen der Form (700) in eine Reinigungsposition unter Verwendung eines Handhabungsroboters (300);
Erkennen von Formmerkmalen und verunreinigten Bereichen des Objekts unter Verwendung einer Erfassungsvorrichtung umfassend eine oder mehrere Kameras (600);
anschließendes Reinigen der Form (700) unter Verwendung eines an einem Reinigungsroboter (400) angebrachten Lasers (420); und
Transportieren der Form (700) aus dem isolierten Raum;
wobei der Reinigungsroboter (400) so konfiguriert ist, dass er den Laser (420) bewegt und den Laser (420) selektiv ein- und ausschaltet, und wobei der Reinigungsroboter (400) einen Prozessor umfasst, der mit der Erfassungsvorrichtung in Verbindung steht, wobei der Prozessor so ausgelegt ist, dass er den Laser (420) als Reaktion auf von der Erfassungsvorrichtung gemachte Beobachtungen in einem Reinigungsmuster über die Form (700) bewegt;
wobei die Form (700) mithilfe eines Transportwagens (500) in den isolierten Raum hinein- und aus diesem herausbefördert wird;
wobei der Transportwagen (500) einen Satz von Formen (700) in den isolierten Raum hinein und aus diesem heraus befördert und das Verfahren umfasst, nacheinander jede Form (700) vom Transportwagen (500) in die Reinigungsposition zu bewegen, jede Form (700) zu reinigen und jede Form (700) zum Transportwagen (500) zurückzubringen; und
wobei die Bewegungsvorrichtung einen Handhabungsroboter (300) umfasst, der einen Greifarm mit einer Greifzange an seinem Ende aufweist, deren Größe angepasst ist, um die Formen (700) zu halten, sodass die Form hochgehoben, in die Reinigungsposition gebracht, gereinigt und wieder zum Transportwagen (500) zurückgebracht werden kann.

6. Verfahren nach einem der vorstehenden Ansprüche, wobei der Laser (420) eine Linse umfasst sowie ferner einen Linsenmonitor, um einen möglichen Ausfall der Linse zu erkennen.

7. Verfahren nach Anspruch 6, wobei der Linsenmonitor einen Infrarotsensor umfasst, um die Temperatur der Linse zu überwachen.

## Revendications

1. Système de nettoyage automatisé (100) pour nettoyer un moule (700) pour une utilisation dans la fabrication de récipients en verre, comprenant :
un logement (200) pour fournir un espace isolé pour le nettoyage du moule (700) ;
un appareil de transport pour transporter le moule (700) dans et hors de l'espace isolé ;
un laser (420) configuré pour être dirigé dans le moule (700), pour éliminer les contaminants du moule (700) ;
un appareil de détection pour identifier une position du moule (700), pour identifier des caractéristiques de moule et des zones de contamination du moule (700) ;
dans lequel l'appareil de détection comprend une ou plusieurs caméras (600) pour identifier précisément les caractéristiques de moule et les zones de contamination ;
un appareil de déplacement pour déplacer le moule (700) dans et/ou hors d'une position de nettoyage ; et
un appareil de commande pour diriger le laser (420) au niveau du moule (700) dans la position de nettoyage, et faire fonctionner le laser (420) pour nettoyer le moule (700),
dans lequel l'appareil de commande comprend un robot de nettoyage (400) configuré pour déplacer le laser (420) et activer et désactiver sélectivement le laser (420), et
dans lequel le robot de nettoyage (400) comprend un processeur en communication avec l'appareil de détection, le processeur étant configuré pour déplacer le laser (420) dans un motif de nettoyage sur le moule (700) en réponse à des observations réalisées par l'appareil de détection ;
dans lequel l'appareil de transport comprend un chariot automatisé (500) pour transporter un ensemble de moules (700), et dans lequel l'appareil de déplacement déplace séquentiellement chaque moule (700) à la position de nettoyage, et remet le moule (700) sur le chariot (500) après nettoyage ;
dans lequel l'appareil de déplacement comprend un robot de manipulation (300) présentant un bras de maintien avec une griffe (320) à son extrémité qui est dimensionnée de manière appropriée pour saisir les moules (700), de sorte que chaque moule (700) puisse ensuite être prélevé, déplacé à la position de nettoyage, nettoyé et remis sur le chariot (500).

2. Système de nettoyage automatisé selon une quelconque revendication précédente, dans lequel le logement (200) comprend des portes labyrinthes (210) pour entrer et sortir de l'espace isolé.

3. Système de nettoyage automatisé selon une quelconque revendication précédente, dans lequel le laser (420) comprend une lentille, et comprenant en outre un moniteur de lentille pour détecter une défaillance potentielle de la lentille.

4. Système de nettoyage automatisé selon la revendication 3, dans lequel le moniteur de lentille comprend un capteur infrarouge, pour surveiller la température de la lentille.

5. Procédé de nettoyage automatisé d'un moule (700) pour une utilisation dans la fabrication de récipients en verre avec un système selon l'une quelconque des revendications précédentes, le procédé comprenant :
le transport du moule (700) dans un espace isolé ;
le déplacement du moule (700) dans une position de nettoyage, à l'aide d'un robot de manipulation (300) ;
l'identification de caractéristiques de moule et de zones de contamination de l'objet à l'aide d'un appareil de détection comprenant une ou plusieurs caméras (600) ;
puis le nettoyage du moule (700) à l'aide d'un laser (420) monté sur un robot de nettoyage (400) ; et
le transport du moule (700) hors de l'espace isolé ;
dans lequel le robot de nettoyage (400) est configuré pour déplacer le laser (420) et activer et désactiver sélectivement le laser (420) et dans lequel le robot de nettoyage (400) comprend un processeur en communication avec l'appareil de détection, le processeur étant configuré pour déplacer le laser (420) dans un motif de nettoyage sur le moule (700), en réponse aux observations réalisées par l'appareil de détection ;
dans lequel le moule (700) est transporté dans et hors de l'espace isolé à l'aide d'un chariot (500) ;
dans lequel le chariot (500) transporte un ensemble de moules (700) dans et hors de l'espace isolé, et le procédé comprend le déplacement séquentiel de chaque moule (700) du chariot (500) dans la position de nettoyage, le nettoyage de chaque moule (700) et la remise de chaque moule (700) sur le chariot (500) ; et
dans lequel l'appareil de déplacement comprend un robot de manipulation (300) présentant un bras de maintien avec une griffe à son extrémité qui est dimensionnée de manière appropriée pour saisir les moules (700), de sorte que le moule puisse ensuite être prélevé, déplacé dans la position de nettoyage, nettoyé et remis sur le chariot (500).

6. Procédé selon une quelconque revendication précédente, dans lequel le laser (420) comprend une lentille, et comprenant en outre un moniteur de lentille pour détecter une défaillance potentielle de la lentille.

7. Procédé selon la revendication 6, dans lequel le moniteur de lentille comprend un capteur infrarouge, pour surveiller la température de la lentille.
